# EUROPEAN PATENT SPECIFICATION

(11) **EP 1 469 431 B1**
(45) Date of publication and mention of the grant of the patent: **23.09.2009**
(21) Application number: 04008733.0
(22) Date of filing: 13.04.2004
(51) Int. Cl.: G07F 9/10, G07F 11/62, A23N 4/02, A23N 4/14, A23N 4/24

(54) **Refrigerated vending machine for fresh fruits**
Verkaufskühlautomat für frische Früchte
Machine réfrigérée de vente de fruits frais

(30) Priority: 16.04.2003 IT TO20030296
(43) Date of publication of application: 20.10.2004
(73) Proprietor: MR & D Institute S.r.L., 21013 Gallarate (VA) (IT)
(72) Inventor: Giua, Alberto, Federico, 21013 Gallarate (VA) (IT)
(74) Representative: Nola, Eduardo

(56) References cited:
- EP-A- 0 923 881
- WO-A-02/09538
- WO-A-02/13754
- FR-A- 2 807 853
- US-A- 3 982 482
- US-A- 4 556 147

## Description

The present invention relates to a refrigerated vending machine for fresh fruits.

More specifically, the invention relates to a refrigerated vending machine for fresh fruits comprising a fruit compartment from which the fruits are susceptible of selection according to the introductory portion of claim 1.

Many types of vending machines for alimentary products and drinks are known, comprising a refrigerated cabinet having a fruit compartment and provided with a display window. The products are generally shown in transparent coverings and the consumer can select them by means of a keyboard control panel, in conjunction with a system of payment with coins, key, ticket or other means.

Such vending machines are also adapted to supply natural fresh fruits. However, typically in the case of apples for example, the consumer may encounter problems and difficulties with respect to the peeling, coring and cutting of the fruit. The offer of fresh fruits through vending machines is therefore substantially limited to installations located in areas equipped for the distribution of food.

Otherwise, the distribution of peeled and portioned fresh fruits is not effectively practical for obvious reasons relating to the deterioration, after a certain period of time, of the treated fruits, even if kept in sealed confections.

French Patent Application FR-A-2 807 853 discloses a vending machine for fresh fruits comprising a fruit compartment from which the stored fruits can be selected, a service tray and a movement mechanism for moving the selected fruit from the fruit compartment to the tray. The fruit compartment is refrigerated, and the fruits laid out on a series of shelves housed in the fruit compartment. The movement mechanism includes a manipulator with a transverse guide for a vertical guide, which carries a mobile arm. The arm can grip pneumatically an individual fruit item from a shelve and carry it directly to the service tray. A computer controls operation of the manipulator.

European Patent Application EP-A-0 923 881 relates to pear processing apparatus including coring and seed celling devices, peeling mechanisms and sets of orienting rolls for processing, along parallel lines, a plurality of pears. The pears of the various lines are fed at the upper end of the apparatus, are aligned for the coring, peeling and seed celling operations and are severed into halves by blades. A singulation device feeds the pears of the lines to the top of the orienting rolls. After the coring, the peeling and the severing, the pear halves are received by a pear conveyor, whilst a waste conveyor receives waste from the coring and seed celling devices and the peeling mechanisms.

PCT Patent Application WO 02/13754 discloses an apparatus for dispensing medication, providing disintegration of tablet in a disposable container and mixing with a flavoured fluid. In one embodiment of the disclosure, a rotating blade is inserted in the container to disintegrate the tablet and mix it with the fluid. Removal of the container from the apparatus causes clean water to enter the device which self cleans by a switching mechanism.

The technical problem of the invention is to increase the availability of fresh fruits in vending machines, without necessitating the consumer to tamper with the fruit in any way.

Another problem of the invention is how to distribute automatically fresh and portioned fruit in an appealing and hygienic state.

These objects are achieved by the vending machine for fresh fruits of the invention according the characterizing portion of claim 1.

Suitably, the vending machine of the present invention manipulates apples; the apples are stored individually in containers equipped with a base having a centering projection for the lower concavity of the apple and the vending machine is equipped with a processing unit including a pronged fruit picker which spikes into the fruit, the prongs entering and lodging around the core in contrast with the projection for a centered picking up of the apple.

The characteristics of the invention will be clear from the following description, provided merely by way of not-restrictive example, with the aid of the annexed drawings in which:
Fig. 1 represents a schematic front view of a vending machine for fresh fruits according to the invention;
Fig. 2 shows a schematic front view of the inner part of the vending machine of Fig. 1;
Fig. 3 represents a lateral schematic view of the inner part of the vending machine of Fig.1;
Fig. 4 represents a schematic perspective partial view of the vending machine of Fig. 1;
Fig. 5 shows another partial perspective schematic view of the vending machine of Fig. 1;
Fig. 6 represents an operative diagram of the vending machine for fresh fruits according to the invention;
Fig. 7a represents a perspective schematic view of a component of the vending machine of Fig. 1, in a given operative condition;
Fig. 7b shows the component of Fig. 4, in a different operative condition;
Figs. 8a to 8f schematically represent various operative conditions of another component of the vending machine of Fig. 1;
Figs. 9a to 9c show several schematic views of a further component of the vending machine of Fig. 1;
Fig.10a represents a schematic perspective view of a container for fresh fruits in according with the invention, in the use condition;
Fig. 10b shows an exploded view of the container of Fig. 10a;
Figs.10c and 10d represent a front view and the cross-section of the container of Fig. 10a;
Figs.11 and 12 represent flow diagrams of the management and of the mode of operating of the vending machine of the invention;
Fig.13 represents another embodiment of the vending machine for fresh fruits according to the invention;
Fig. 14 represents a further embodiment of the vending machine for fresh fruits according to the invention;

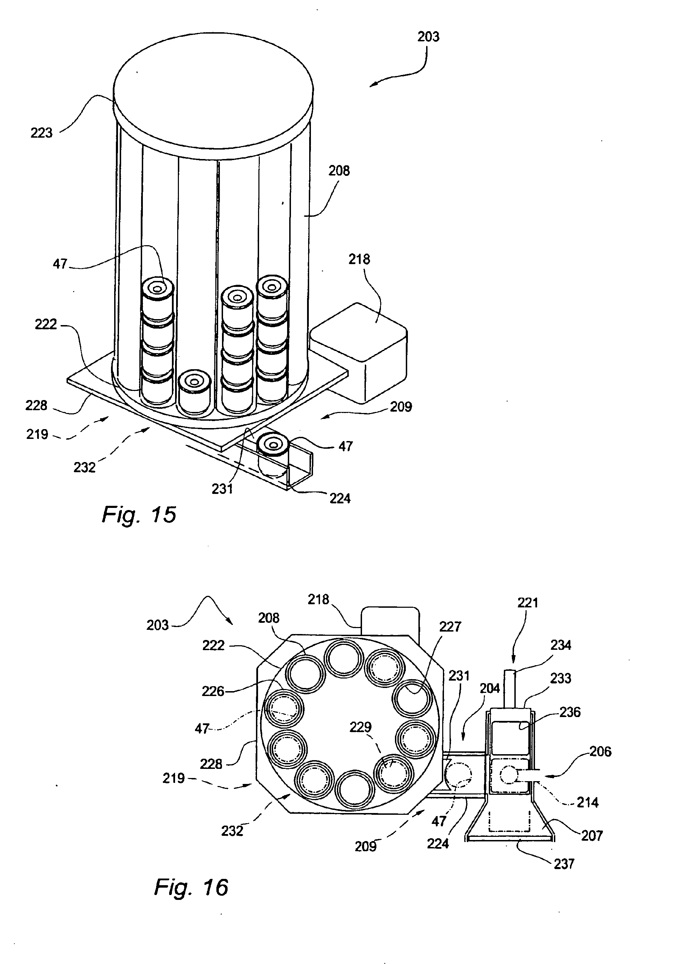

Fig. 15 shows details, in an enlarged scale, of the vending machine of Fig. 14; and
Fig. 16 represents a top schematic view of details of the vending machine of Fig. 14.

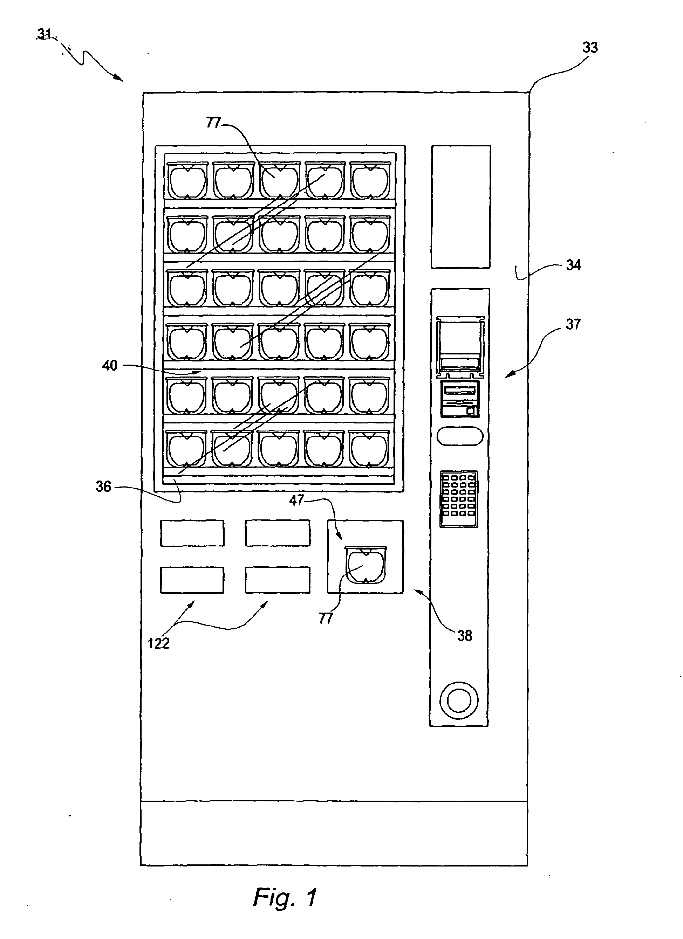

Represented with 31 in figure 1 is a refrigerated vending machine for fresh fruits, comprising a cabinet 33 having a front door 34 with a display window 36, a control panel 37 which also houses a payment unit, and a service tray 38.

The fruits are stocked in a fruit compartment 39 of the cabinet 33, by means of drawers 40, and are visible through the display window 36. The drawers are on several levels of the compartment 39 and slide on respective seats with possibility of being partially, but not fully extractable. The stocked fruits are selectable by means of a keyboard of the control panel 37 and are made available to the consumer in a service tray 38.

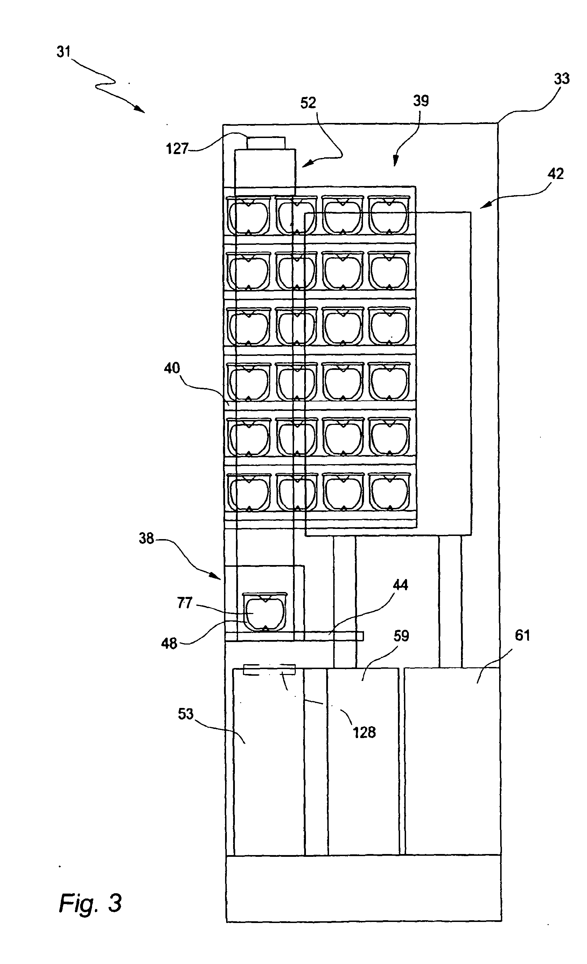

According to the invention, the vending machine 31 (Figs. 1-5) comprises a moving mechanism 41, a processing unit 42 for peeling and/or cutting the stocked fruits and hygienic protection means 43. An electronic control unit, a power supply and the respective wiring, not represented in the drawings, interface the panel 37 and provide the control and power for the electromechanical components of the vending machine 31.

The mechanism 41 includes a platform 44 and is designated to move the fruit selected from the compartment 39 to a working station 45 where the processing unit 42 operates and from the working station to a service tray 38, where the prepared fruit is distributed.

The unit 42 is actuatable for peeling and portioning a fruit selected from the compartment 39 and the hygienic protection means 43 assure a distribution of the fruits prepared in excellent hygienic conditions.

The vending machine 31 has also the capability to distribute, in its natural state, a fruit selected from the compartment 39 without any actuation of the unit 42.

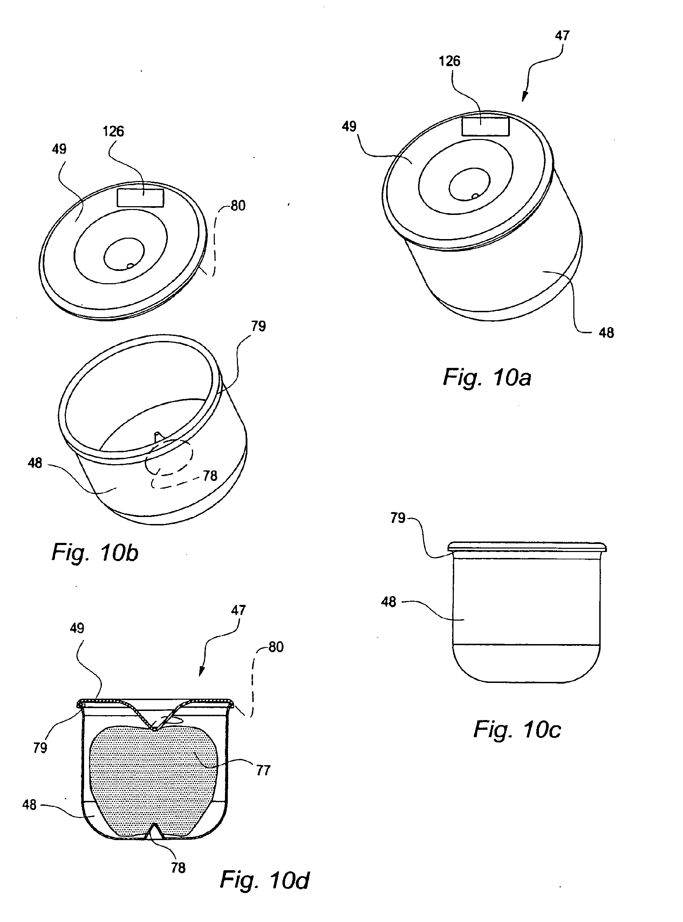

The fruits offered for vending are selected and washed and, in order to guarantee their edibility and maintain them in a well preserved state, they are placed inside a container 47 (Figs. 10a to 10d), sterile and hygienically protected.

The containers 47 are defined by a small cup 48 and a removable sealed cover 49 or other sealing elements as, for example, a thermo-sealed film, of known type. The containers are, in turn, lodged in the drawers 40 (Figs. 1 to 6) of the fruit compartment 39.

For the opening of the container 47, the vending machine 31 provides a device 52 for the removal of the cover 49 or the sealing element. A tank 53 is associated to the device 52 for collecting the covers 49 removed by the device 52.

The removal device 52 is disposed in a control area 54 at the highest part of the cabinet 33. It comprises, for example, a motorized unit, a mechanical holding member or a depression holding member for the small cup 48 and a removal member also of a mechanical or depression type for the cover 49, not shown in the drawings. In case of use of thermo-sealed films, a cutting tool can be associated to the removal member.

The fruit compartment 39 takes up a good portion of the higher part of the cabinet 33 and is accessible by opening the door 34. The processing unit 42 is situated adjacent the compartment 39 and the service tray 38 is situated underneath this compartment.

The lower part of the cabinet 33 holds a cooling unit 56 and a pump 57 and defines a vane which is also accessible upon the opening of the door 34. This vane holds the tank 53 for the covers 49 and the tanks 59 and 61 respectively assigned to the collection of organic discards of the fruits processed by the unit 42 and to the collection of waste generated by the hygienic protection means.

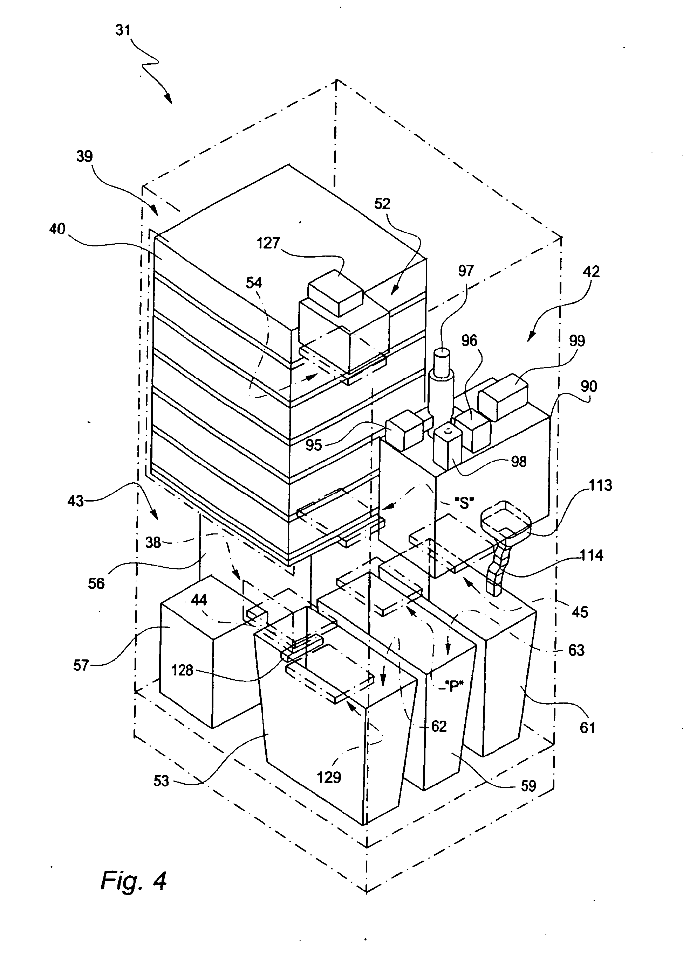

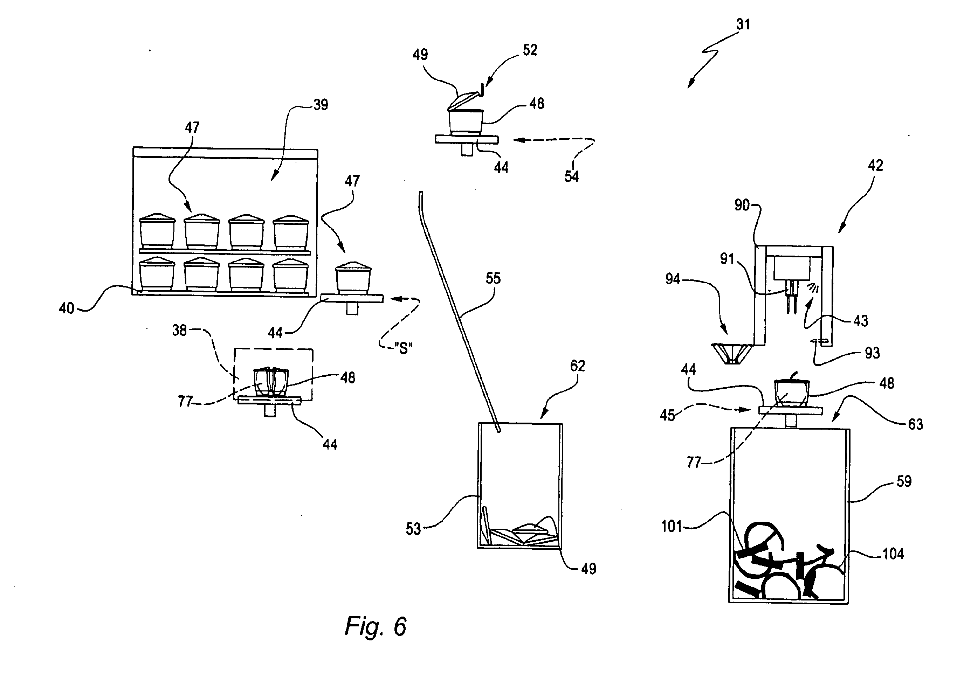

The cover receiving tank 53 (Fig. 4) has an access 62 arranged underneath the control area 54 and is adapted to receive, by gravity, the covers 49 by means of a slide 55 schematically shown in Fig. 6. The receiving tank 59 (Fig. 4) has an access 63 arranged underneath the working station 45 for freely receiving, by gravity, the discards of the fruits processed by the unit 42.

The vending machine 31 has typical dimensions of 800 (1) x 600 (p) x 1800 (h) millimetre. The drawers 40 can have various dimensions and the compartment 39 can have a nominal capacity of 150 fruits approximately.

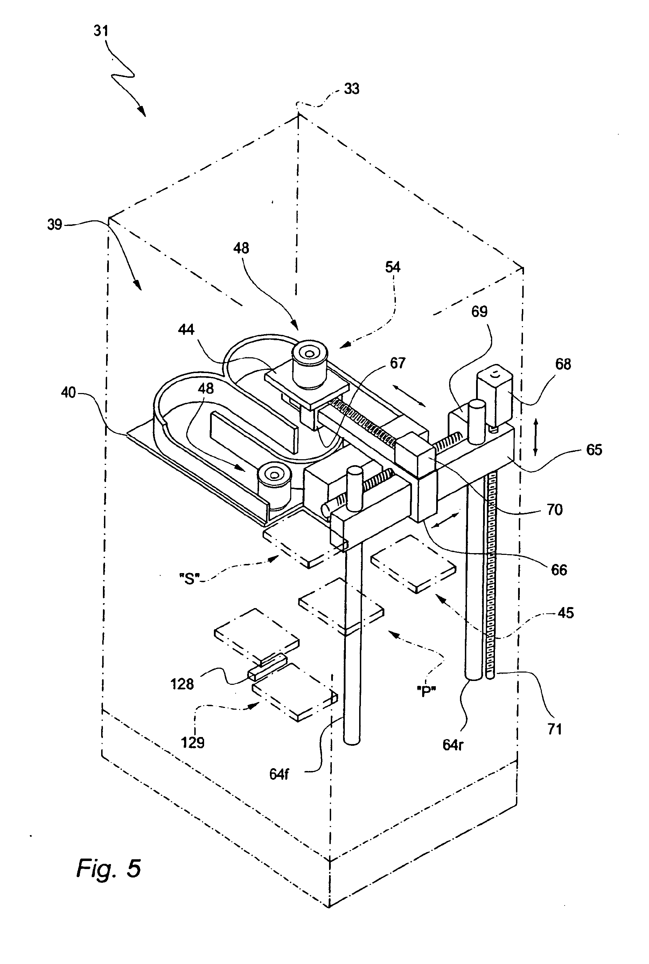

The moving mechanism 41 (Fig. 5) can be, for example, of three axes Cartesian type. It comprises two vertical guides 64f and 64r, adjacent to a wall of the cabinet 33, and three carriages 65, 66 and 67 driven by three motors 68, 69 and 70 through correspondent transmission members 71, 72 and 73.

In detail, the carriage 65 is vertically sliding on the guides 64f and 64r and is moved, by the motor 68, through the transmission member 71. The carriage 66 can slide forth and back on the guides of the carriage 65, and is moved by the motor 69 by means of the transmission member 72.

The carriage 67 supports the platform 44. It is slideable on cantilever guides of the carriage 66 transversely to the cabinet 33 and is moved by the motor 70 through the transmission member 73.

In a typical configuration, the vending machine 31 (Figs. 1 to 3) is predisposed in order to stock and therefore to serve apples 77 of a given size as preferred fresh fruits.

The containers 47 (Figs. 10a-10d) have dimensions a little larger than the ones relating to the chosen size of the apples. The respective small cups 48 comprise each one a centering projection 78 provided for cooperating with the lower concavity of the apple 77 to be kept.

The small cups 48 further include an upper edge 79 fittable by a complementary socket 80 of the cover 49 and sockets or projections, not shown in the drawings, engageable by the holding member of the removal device 52, when it is of mechanical type.

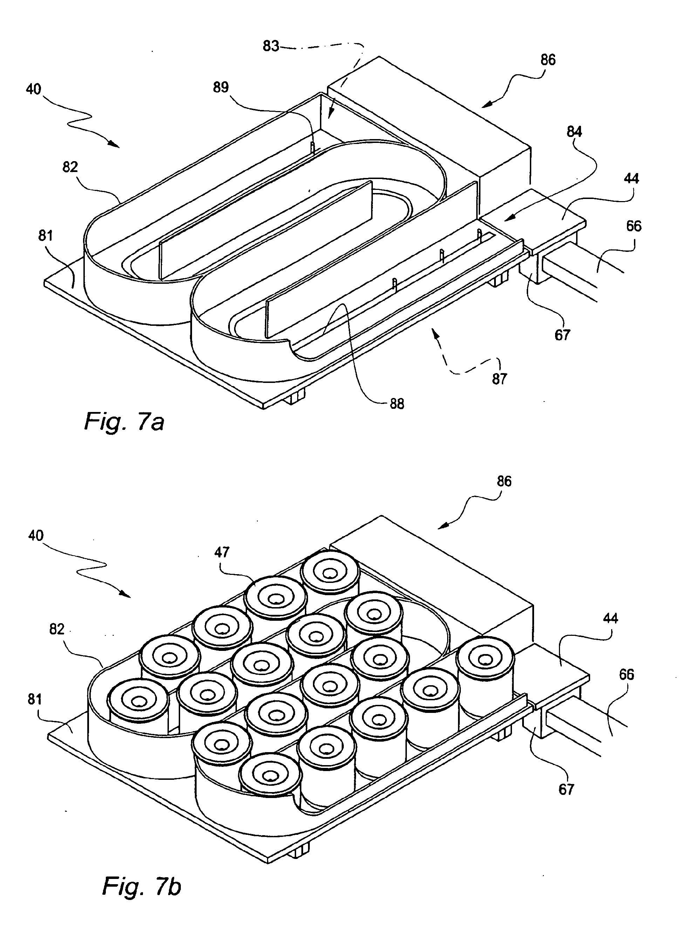

The drawers 40 (Figs. 7a and 7b) comprise each one a bottom 81 and guiding walls 82 having flat and curvilinear surfaces to arrange the containers 47 in a single row, serpentine like, between a starting area 83 and an output vane 84. The drawers are motorized for dragging the containers 47, one by one, on the platform 44 of the mechanism 41 through the vane 84.

To this end, the drawers 40 comprise each one a motor group 86 and a chain mechanism 87 arranged near and underneath the bottom 81, respectively. The motor groups 86 of the various drawers are connected to the control electronic unit and the power supply of the vending machine through flexible cables, not shown in the drawings, in order to allow a partial extraction of the drawers 40 from the respective seats, for the loading of the containers 47.

A serpentine-like notch 88 is provided in the bottom 81 in an intermediate position between the walls 82. The chain mechanism 87 includes a series of shifting elements 89, projecting from the serpentine-like notch 88 and with possibility of sliding with respect to the notch 88.

The shifting elements 89 are adapted to engage and drag the containers 47 from the starting area 83 to the output vane 84 and going back to the area 83 underneath the bottom 81, according to a known technique.

The processing unit 42 (Figs. 4, 6, 8a and 8e) includes a cantilever structure 90, a taking member 91, a centering and expulsion element 92, a peeling device 93 and a cutting and coring tool 94. The unit 42 comprises moreover motor groups 95 and 96 for the taking member 91, an actuator 97 for the element 92, a motor group 98 for the peeling device 93 and an actuator 99 for the tool 94.

The structure 90 (Fig. 6) defines a bottom less room around the taking member 91 which is accessible by the carriage 67 and separates the station allotted to the workings of the fruit from the other components.

The taking member 91 represents a fruit picker. It includes a cylindrical element supported in vertical by the upper part of the structure 90, in axis with the working station 45 and susceptible of axial and rotating movement with respect to the same structure 90.

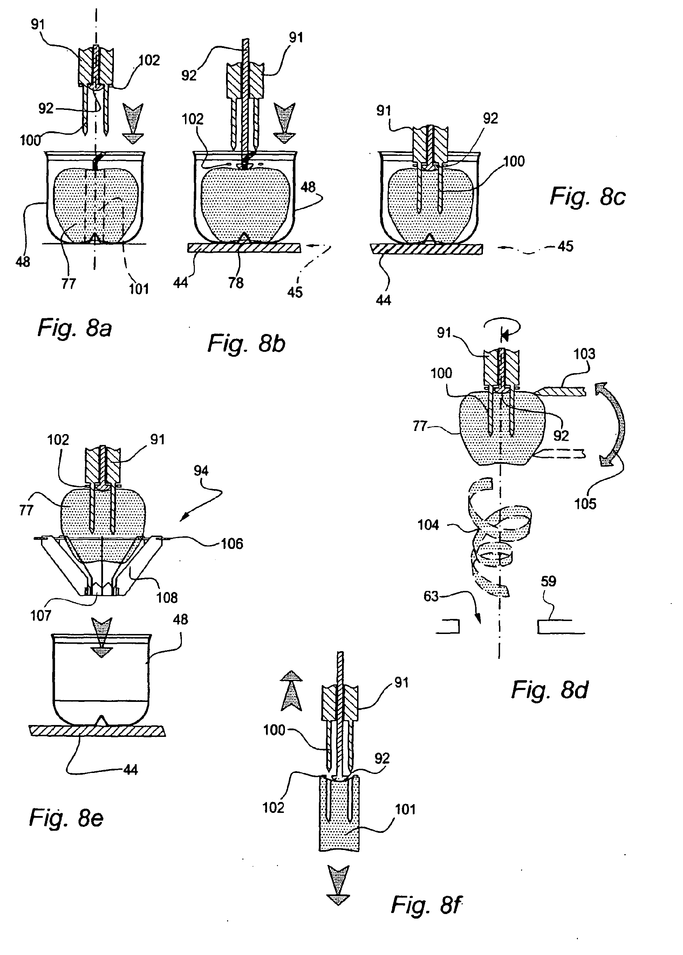

The member 91 is equipped with prongs including four pointed ends 100 (Figs. 8a to 8f) parallel to the axis, 90° and spaced one from the other which can spike into the apple 77 around a core 101.

The motor group 95 (Fig. 4) is predisposed for axially moving the taking member 91 between a raised position (Fig. 8a) and a lowered position (Fig. 8c) and the motor group 96 (Fig. 4) is actuatable for the rotation of the member 91.

The centering and expulsion element 92 (Figs. 8a-8f) includes a rod, coaxial with the member 91, having possibility of sliding in the cylindrical element of the member. The element 92 is equipped of a rounded off extremity and a ring 102 to the outside of the pointed ends 100 and adjacent to them.

The actuator 97 (Fig. 4) is constituted, for example, by a solenoid and is designated to move the element 92 (Figs. 8a to 8f) with respect to the taking member 91 between a raised position, of rest, and a lowered position, of centering for the fruit or expulsion.

In the rest position, the extremity of the element 92 is retracted to the inside of the pointed ends 100 and the ring 102 is adjacent to the cylindrical element. In the position of centering or expulsion, the rounded off extremity and the ring 102 are extracted and project with respect to the pointed ends 100.

The element 92, in its lowered position (Fig. 8b), is adapted to spike into a conventionally upper hollow of an apple 77 in the station 45 and performs a centering function. Moreover, in this lowered position, the element 92 (Fig. 8f) has function of expulsion for the apple parts and for the core 101 taken between the pointed ends 100, as it will be later described.

The peeling device 93 (Figs. 6 and 8d) comprises, as for example, a sharp blade 103 susceptible of movement with respect to the structure 90 by the motor group 98 (Fig. 4) from a raised inoperative position to a series of positions in which the blade can cooperate with an apple 77 held by the taking member 91.

Conveniently, the support of the blade 103 (Figs. 6 and 8d) can follow a curvilinear trajectory 105 associated to the theoretical profile of a standard apple 77. It can elastically yield adapting itself to the surface of the apple, maintaining a substantially constant force.

This support can be removed for enabling periodic cleaning operations or maintenance operations.

At rest, the taking member 91 (Fig. 8a) is in the raised position above the working station 45. In the lowered position (Fig. 8c), the pointed ends 100 can spike into the apple 77 when the apple is in the station 45. Returning towards the raised position (Fig. 8d), the member 91 moves the apple 77 upwardly in a position of peeling underneath the blade 103.

Upon actuation of the motor group 98, the blade 103 goes in interference with the spiked apple 77 and causes the progressive, spiral, peeling thereof, for the effect of the combined rotational movement of the apple and the translation of the blade. By this operation, a peeling discard 104 is formed.

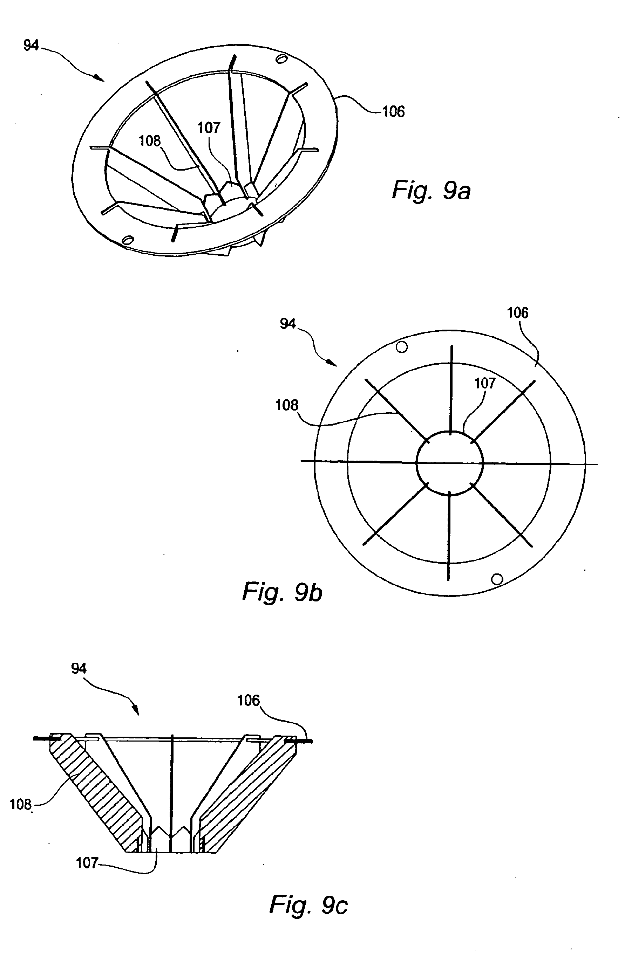

The cutting and coring tool 94 (Figs. 9a-9c) is supported by the structure 90 (Figs. 4, 6 and 8e) in a known manner not shown in the drawings for being moved by the actuator 99 between an inoperative position and an operative position. In the inoperative position, the tool 94 is out of the raising trajectory of the apple 77 and, in the operative position, the tool is in interference with the lowering trajectory of the apple caused by the member 91.

The cutting and coring tool 94 comprises an upper ring 106, a ring-like coring blade 107 and a series of radial blades 108, as for example eight, arranged as a crown and connected between the ring 106 and the ring-like blade 107. Therefore the shape of the tool is substantially frusto-conical and in which the largest base is constituted by the ring 106 and the smaller base is constituted by the lower edge of the ring-like blade 107. The axis of the tool 94 is common to the symmetry surfaces of the radial blades 108 and the lateral surface is defined by the lateral external edges of the radial blades 108.

The inner part of the ring 106 has a diameter greater than the one of the apples 77 stocked in the compartment 39. In turn, the diameter of the ring-like blade 107 is a little larger of the diameter of the cores 101 and of the maximum distance between the pointed ends 100.

With this structure, the cutting tool 94 can portion an apple 77 in a number of slices equal to the number of the blades 108 and can provide to its coring when the apple is forced by the taking member 91 through the series of blades 108 and the ring-like blade 107. After the cutting, the formed slices tend to assume a symmetrical and regular arrangement.

On the other hand, the small cup 48 of the container 47 also carries out the function of an appealing presentation of the apple prepared in the tray 38 and maintains the symmetrical arrangement of the slices after the peeling, coring and cutting by the processing unit 42.

According to the invention, as well as hygienically protect the stocked apples 77, the containers 47 pre-position the apples with respect to the processing unit 42.

To advantage, the centering projection 78 cooperating with the lower concavity of the lodged apple causes the apple to remain still and centered and with a constant orientation inside the container 47 during the displacement of the container from the fruit compartment 39 to the station 45.

In the working station 45, the projection 78 is in axis with the centering and expulsion element 92 and the taking member 91. Therefore, the lowering of the element 92 causes an automatic centering of the apple with respect to the upper hollow and the lower concavity whilst the apple is still inside the container 47.

The means of hygienic protection 43 are directed to assure the distribution of the fruits, complying with the sanitary rules of the countries in which the vending machines 31 should be installed, such as the rules of the HACCP European System (Hazard Analysis and Critical Control Point).

The means of hygienic protection 43 comprise, for example, the cooling unit 56, a cleaning device 111 for cleaning the processing unit 42 and means of radiation not shown in the drawings.

The cooling unit 56 is of forced air type and maintains at a low and controlled temperature (1-5 degrees) the fruits stocked in the compartment 39 and suitably refrigerated the discards of the tank 59. All this, for avoiding condensing phenomena, mildewing and stagnation, according to known techniques.

The cleaning device 111 includes the pump 57 and injectors for spraying nebulized water for the processing unit 42 and, for example, a funnel 113 with a tube portion 114 and moving means for the funnel 113 not shown in the drawings.

The pump 57 is connectable to the water network and the injectors are suitable for cleaning the unit 42 by the rests of pulp and juice left by the working, and for sanitizing the vane defined by the structure 90 and the others components in contact with the apple 77.

The respective moving means are actuated to move the funnel 113 from an inoperative position, represented in figure 4, to the station 45 when it has been freed by the platform 44, so as to divert the cleaning residuals toward the tank 61 through the tube portion 114.

The sanitation of the processing unit 42 is effected by the electronic control unit, with actuation of the pump 57 and the moving means for the funnel 113 at the end of a series of working cycles, in an automatic way, after a predetermined period of inactivity or, in alternative, for each working cycle of the unit 42.

The radiation means provide, for example, ultraviolet beams and operate for maintaining bacteriologically inert the taking member, the peeling device and the cutting and coring member. To this end, a high intensity UV-C germicide lamp can be provided for the various components and the surfaces of the processing unit 42. The combination of the high pressure washing and the radiation with germicide lamp contribute to sterilize the surfaces of the processing unit and to deodorize the cabinet 33.

The vending machine 31 (Fig. 1) also includes storing and service means for fruit flatware and/or flavourings for the prepared fruit. The storing and service means comprise vanes 122 accessible by the consumer, storage compartments and selection means not shown in the drawings. These means operate, upon request, jointly to the distribution of the prepared fruit for releasing in the vanes 122 the flatware and the flavouring. Plastic fork, knife and cup can be provided as flatware and bags with sugar, sweetener, lemon juice etc can be provided as flavouring.

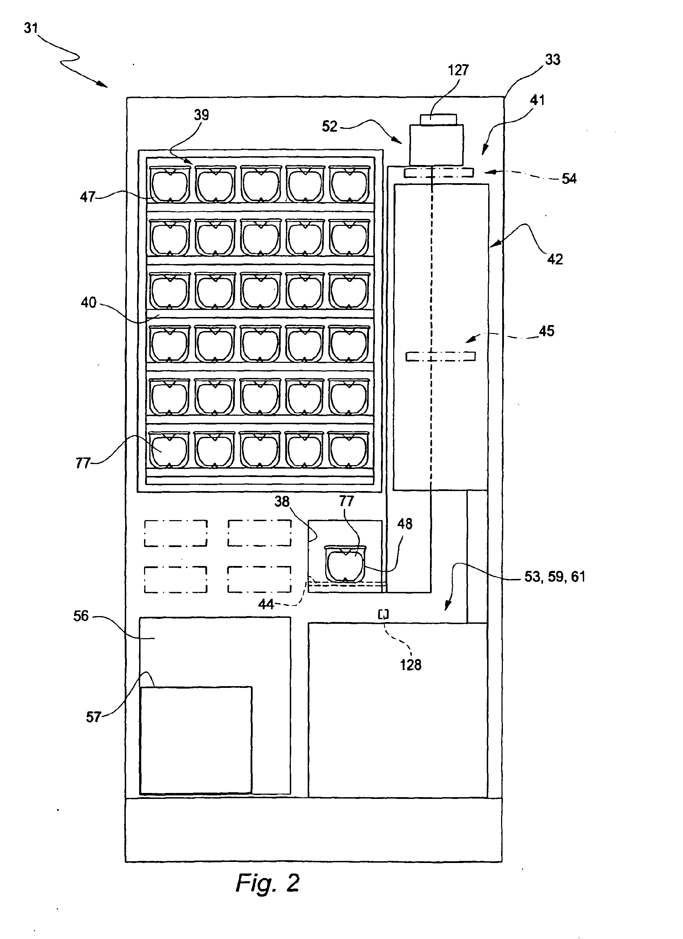

Opportunely, the containers 47 (Figs. 2, 10a and 10b) provide labels 126 with respective bar codes representative of the typologies of the contained fruits and of the date of expiration. The drawers 40 are loaded with products having homogenous typologies and the vending machine 31 provides, in turn, a reading and check device 127 of these data.

For example, the labels 126 are on the covers 49 of the containers 47 and the device 127 (Fig. 4) is disposed in the highest part of the cabinet 33, close to the removal device 52, aligned with the output vanes of the drawers 40.

The device 127 is provided for reading the data of the containers 47 on the platform 44 in the area 54 and feeding a consent information for the following treatment of the fruits or the distribution in the natural state.

A deviation element 128 is associated to the device 127. The element 128 is suitable for interacting with the moving mechanism 41 in order to deviate in the tank 53 the containers 47 with not acceptable data. As an example, the element 128 comprises a fixed small bar, arranged beneath the service tray 38 near to the access 62.

In case of missing of the consent information, the moving mechanism 41 is provided to move the platform 44 from the area 54 to an area 129, a little beneath the level of the element 128 but in which the container 47 on the platform is at the same level and at a side of the element 128.

From the area 129, the carriage 67 can move transversely to the platform 44, remaining underneath the element 128 but causing the arrest of the non-acceptable container 47, contrasted by the element 128. As a result, the platform 44 slides with respect to the container up to made lacking the support, and causing the fall of the non-acceptable container in the tank 53.

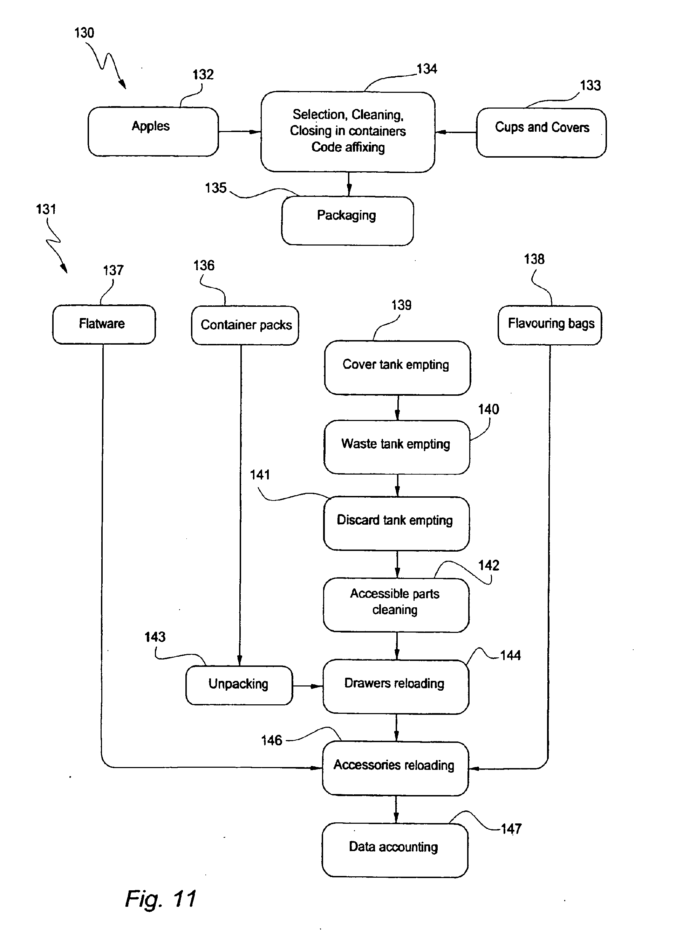

With reference to the flow diagram of Fig. 11, the management of the vending machine 31 provides a preliminary phase 130 and an ordinary phase 131 that can be executed by different organizations and/or persons.

In the phase 130, steps 132 and 133, the apples 77 of given size and quality and the containers 47 with the respective covers 49 sterile and in material for alimentary use are supplied.

In a successive step 134, the apples 77 are carefully selected and washed. Then, the apples are stored in the small cups 48, the cups are watertight closed with the covers 49 and the labels 126 with the respective codes identifying the typology and the expiring dates are affixed. It guarantees that the container 47 will be not contaminated by bacteria or noxious substances that can be present on the peel of the apple 77 and the small cup 48 is re-utilizable with full hygienic safety for keeping and showing the portioned fruit.

Finally, the phase 130 can provide a step 135 in which the containers 47, full loaded and sealed, are arranged in packages adapted to the storing in refrigerated places and to the transport.

The step 134 is executed by personnel sanitarily qualified and authorized to the manipulation of alimentary substances, on the basis of the current sanitary rules.

The ordinary management phase 131 relates to supplying the packages with the containers 47 in a step 136, the supplying of the flatware and of the bags with the flavouring in steps 137 and 138, and a series of operations inherent to the cleaning and the maintenance of the vending machine 31 and to its supplying.

The operations of the management phase 131 do not provide any direct manipulation of the aliments and can be executed by a generic staff.

In particular, step 139, the charged operator provides to empty the tank 53 containing the covers 49 and, in the steps 140 and 141, he empties and cleans up the tank 61 with the residuals of the cleaning and the tank 59 with the organic discards. The operator also executes, in step 142, a general cleaning of all the accessible parts, both internal and external of the vending machine 31.

After picking up the full containers 47, in a phase 143, the charged operator partially extracts the drawers 40 from the fruit compartment 39, recharges in a step 144, the single drawers 40 with containers 47 of homologous typology and inserts the drawers again in the compartment 39. Then, the operator will check the content of the storage compartments for the flatware and the flavourings and will provide, in a step 146, to a suitable recharge of these accessories.

Finally, the charged operator will provide, in a step 147, to the accounting of the amount of the consumed products and the data of payment from the control panel 37, the withdrawal of the stored coins and/or tickets ,if any, and to the restoration of vending machine 31 for its normal operation.

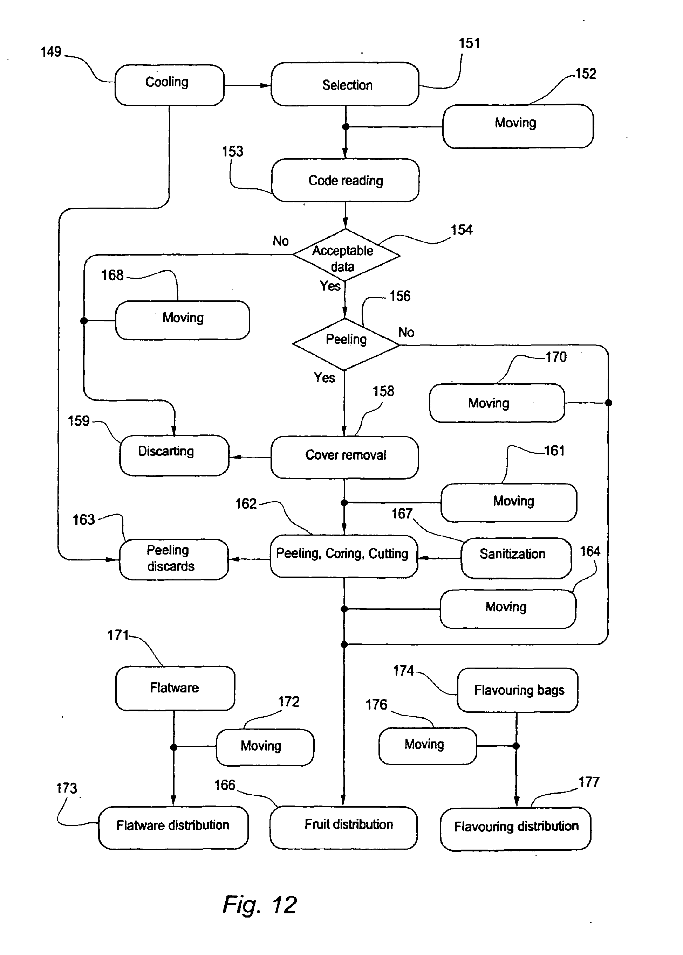

With reference to the flow diagram of Fig.12, the mode of operating of the vending machine 31 is as follows:

The cooling unit 56 maintains the fruit compartment 39 and the tank 59 for the collection of the organic discards in conditions of continuous refrigeration, phase 149, preserving the stocked fresh fruits and reducing the deterioration of the organic discards.

In a phase 151, the customer selects through the panel 37 the typology of a wished fruit and the mode of its preparation, in the natural state or portioned, whereby starting up the cycle of the electronic control unit.

On the basis of the demand, the phase of movement 152 is executed. In this phase, through suitable controls for the motors 68, 69 and 70 (Fig. 5) the platform 44 is displaced at the height of the selected drawer 40, position "S". The motor group 86, through the mechanism 87 and the elements 89, moves the containers 47 in the drawer 40 carrying the first container 47 of the row on the platform 44, through the output vane 84.

In the phase 153 (Fig. 12), the moving mechanism 41 moves the platform 44 (Fig. 4) with the selected container 47 up to the control area 54. Here, the device 127 reads on the label 126 the respective code with updating of the amount of the consumed typology of fruit and checking of the expiration data.

In the case in which, decision block 154, such data are acceptable, the program proceeds, in the decision block 156, to control the demand by the customer.

If the selection relates to a peeled and portioned fruit, the device 52 removes from the small cup 48 the cover 49, phase 158, and discards the cover in the tank 53, phase 159. Then, follows the phase of movement 161 in which the mechanism 41 moves the small cup 48 in the working station 45, in registration with the processing unit 42.

The phase 162 of peeling, coring and cutting provides the drive of the actuator 97 and the motor groups 95 and 96 (Figs. 8a-8f) for the sequential lowering of the element 92 and the taking member 91, the drive of the motor group 98 of the peeling device 93 and the drive of the actuator 99 for the cutting tool 94.

In particular, with the drive of the actuator 97, the rod with the rounded off extremity is lowered and engages the upper hollow of the apple 77 (Fig. 8b), maintaining it centered.

Then, with the drive of the motor group 95 the pointed ends 100 spike into the apple 77 around the core 101 (Fig. 8c). The group 95 is actuated again for positioning the taking member 91 and the centering element 92 in the upper position (Fig. 8d) and the apple 77 in the peeling position underneath the blade 103.

The moving mechanism 41 (Figs. 4 and 5) proceeds to move back the platform 44 with the small cup 48, in the position "P", freeing the access 63 of the tank 59.

The motor group 96 now rotates the taking member 91 with the spiked apple and the motor group 98 moves down the blade 103, along the trajectory 105, (Fig. 8d), proceeding to the complete peeling of the apple, and returning thereafter to its rest raised position.

In a phase 163 the peeling discard 104 falls by gravity and is collected in the tank below 59.

The moving mechanism 41 (Figs. 4 and 5) now proceeds to position back the small cup 48 in the working station 45. The actuator 99 is also actuated, putting the tool 94 (Fig. 8e) in axis with the taking member 91.

The motor group 95 is actuated again for lowering the taking member 91. Thus, the spiked apple 77 is forced against the blades 108 and the ring-like blade 107, is cut in slices and deprived of the core. At the end of this operation, the slices fall in the below small cup 48, maintaining the symmetry of the cutting.

In the phase 164, (Fig. 12) the moving mechanism 41 proceeds to move the platform 44 with the small cup 48 and the portioned apple 77 (Fig. 4) from the working station 45 to the service tray 38, where the prepared fruit is made available to the consumer, in the phase 166 (Figs. 1 and 12).

The selection and the movements of the flatware and of the bags with the flavouring is executed in phases 171, 172, 173 and 174, whilst the flatware and the selected bags are distributed in the trays 122, phases 176 and 177.

Then the actuator 99 and the actuator 94 (Figs. 4, 8e and 8f) are energized in sequence, to carry the tool 94 away from the axis of the taking member 91. The actuator 97 is also energized for lowering the element 92, whereby removing the core 101 taken by the pointed ends 100 by means of its rounded extremity and the ring 102.

The core 101 also falls by gravity in the below tank 59. Further, the motor group 95 is actuated again to move back the member 91 in the raised position.

After a predetermined period of time of rest of the vending machine 31, the electronic control unit starts up the phase 167 (Fig. 12), in which the cleaning device 111 proceeds to clean the processing unit 42.

In particular, the respective means of movement are actuated for moving the funnel 113 up to the working station 45. The pump 57 is also actuated for spraying the water in the vane defined by the structure 90 and on the other components of the unit 42 in contact with the apple 77 with cleaning of the parts and, the waste generated by the cleaning is diverted in the tank 61 through the tube portion 114.

At the end of the cycle, the means of movement are actuated again in order to re-positioning the funnel 113 in the inoperative position externally to the station 45.

In the case in which, decision block 154, the data read on the label 126 are not acceptable, the control unit proceeds to the phase of movement 168 in which the moving mechanism 41 (Figs. 4 and 5) moves down the platform 44 with the container 47 up to the area 129 and, transversely, beneath the element 128, causing the container to fall in the tank 53. Then the cycle restarts with the phase 152 for selecting and moving another container.

If the choice in the decision block 156 relates to the fruit prepared in the natural state, the phase 170 is executed in which the moving mechanism 41 (Figs. 4 and 5) moves the platform 44 with the closed container 47 from the control area 54 to the service tray 38, where the fruit is distributed, as for the phase 166, (Fig. 12) and in association with the phases of distribution of the flatware and the flavouring bags.

Naturally, the embodiments and the details of construction may be varied with respect to what has been described and illustrated purely by way of non- restrictive example, without departing from the scope of this invention.

The tanks 59 and 61 can be equipped of covers actuatable in a controlled way at the moment of the reception of the discards and the waste and at the moment of the emptying and cleaning operations.

As variant of the cleaning means 111, the cleaning of the processing unit 42 could be executed by means of vapor of a specific generator connected to a water tank.

In alternative to the stocking through closed containers it can be provided a storing of cleaned up fruits without any container. In this case, the positioning of the fruit is carried out by parts of the vending machine which are cyclically sanitized. Then, the distribution of the portioned fruit is carried out on independent small cups distributed by a suitable unit and the cups are positioned in the working station only in the phase immediately preceding the distribution of the fruit.

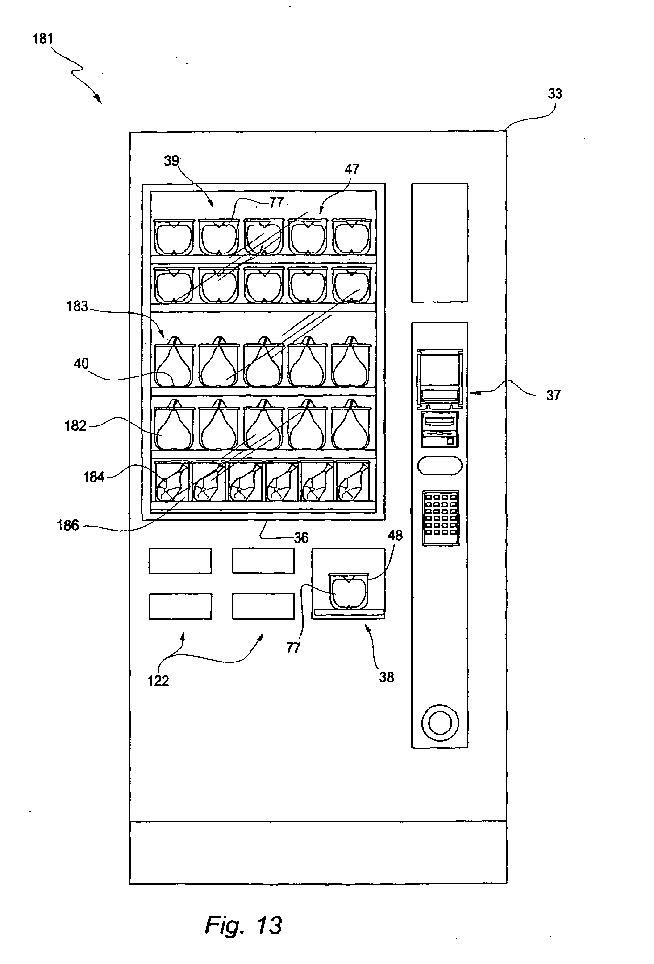

In the embodiment of Fig. 13, the vending machine is indicated with 181 and provides the distribution of fruits alternative to the apples 77 considered till now. It involves a series of modifications that concern the shape of the containers, and in particular of the small cups and their respective covers, and the mode of arrangement of the single fruit internally to the container.

For typologies of stocked fruits which do not request peeling, as strawberries, cherries etc, or where it is not convenient to carry out particular treatments, as for bananas, oranges, mandarin, etc, the distribution will be executed without any action of the dedicated apparatus, as for the distribution, in the natural state, of the apples 77 in the vending machine 31.

For example, the vending machine 181 can stock and work in alternative, in addition to the apples 77, pears 182 in containers 183 to be opened and/or bananas 184 which can be distributed in the natural state in specific closed containers 186.

In the case of distribution of the pears 182, the vending machine 181 comprises a second processing unit for selectively executing the specific operations on the chosen fruits or, in alternative, the processing unit 42 could be modified for treating various typologies of fruit. The taking, peeling, coring and cutting mechanisms, will be modified to be in agreement with the peculiarities of the fruits.

For example, the container 183 will provide an upper seat to receive the stalk of the pear and the centering element of the taking member may be tubular for receiving the part of the pear adjacent to the stalk. The trajectory of the peeling device will be associated to a standard pear.

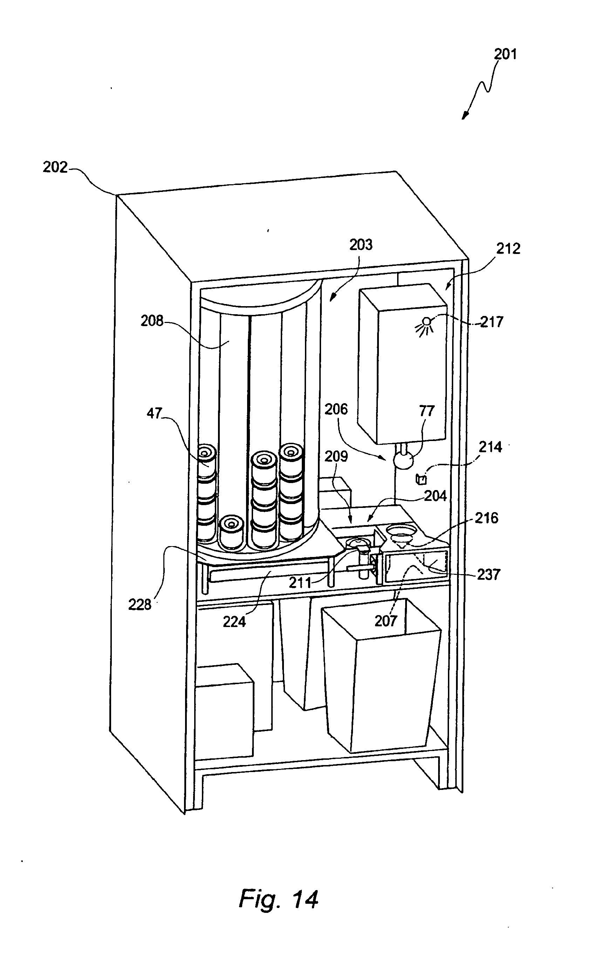

A further embodiment 201 of the vending machine of the invention comprising a cabinet 202 is represented in Fig. 14. The cabinet 202 has functional features and interface features for the consumer similar to the ones of the cabinet 33 of Fig. 1. However, the containers 47 for the apples 77 or the containers for other fruit are stocked in a drum group 203. As in the cabinet 33, the cabinet 202 includes a cover removing station 204, a working station 206, a service tray 207, the tanks for the discard products, cleaning means and the components for the refrigeration.

The containers 47 are lodged, overlapped, in transparent tubes 208, vertically supported by the drum group 203. The tubes 208 are visible through the display window of cabinet 202 and can be partially or totally extracted from the group 203 for the recharging of the containers. On the basis of the choice of the consumer, the group 203 can be rotated, positioning the tube with the typology of the selected fruits in front of an output station 209. The container is then suitably moved from the station 209 for the following operations.

The covers of the containers 47 are removed in the station 204 by a device of removal 211. The peeling and the portioning of the fruits are effected in the working station 204 by a processing unit 212 having a peeling device 214 and a cutting and coring tool 216. Cleaning means 217 provide to the cleaning of the unit 212. These components are similar to the correspondent devices 52 and 93 and to the tool 94 and, for the sake of brevity, are not described herein.

The mechanism for selecting and moving the fruits includes a selection section 218, a section 219 for transversal movement and a section 221 for front /rear movement. The section 218 is designated for rotating the drum group 203 and arresting it in a series of positions of selection defined by the angular pitch of the tubes 208. The sections 219 and 221 move the selected container 47 from the output station 209 to the removal cover station 204 and to the working station 206 and from the working station 206 to the service tray 207, respectively. The containers are moved substantially coplanar with the surface of support of the service tray 207.

Specifically the drum group 203 has a base 222 and a cover 223, both of circular section, and the output station 209 includes a channel 224. The base 222 peripherally defines a series of annular notches 226 and a corresponding series of openings 227. The notches 226 are engaged by the lower edges of the tubes 208 and the openings 227 are coaxial with the notches 226 and a little larger, in section, than the section of the containers 47.

The base 222 is overlapped, with possibility of rotation, on a selection plate 228 having an output opening 229 above the channel 224. The plate 228 closes the openings 227 except that for the positions of selection of the drum group 203 in which the opening 227 associated to the selected tube 208 is in axis with the opening 229. In these conditions, the container of the fruit chosen by the consumer can cross, by gravity, in the underneath the channel 224.

The channel 224 is disposed parallel to the front of the cabinet, between the axis of the opening 229, the cover removal station 204 and the working station 206, behind the service tray 207.

The section 219 for transversal movement comprises a shutter drawer 231 sliding in the channel 224 and a transmission member 232 connected with a motor not shown in the drawings. The drawer 231 has an upper surface which normally closes the output opening 229 and a lateral surface which can displace a container 47 along the channel 224.

The section 221 for front/rear movement comprises a lengthened plate 233 and a transmission member 234 connected with another motor, also not shown. The plate 233 is designated for moving the container 47 between the working station 206 and the service tray 207 and has a front portion for supporting the container moved from drawer 231 and a rear opening 236 for the access to the discard tank.

The flatware and the flavourings may be supplied directly into the service tray 207 jointly with the distribution of the fruit.

In detail, in the rear position, the plate 233 receives with its front portion the container 47 displaced by the drawer 231 and, then, contrasts the action exercised on the fruit by the taken member of the peeling device 214. After the raising of the fruit the plate 233 is forwardly moved by the section 221, with temporary positioning of the empty container in the service tray 207 and positioning of the opening 236 above the discard container for receiving the peeling discards. Thereafter the plate 233 is moved again in the rear position for receiving in the container the portioned fruit and, finally, the plate is moved forwardly, whereby positioning the container 47 with the portioned fruit in the service tray 207.

Conveniently, the service tray 207 remains closed by an opaque wall 237 during all the phases preceding the phase of accessibility of the fruit for the consumer.

## Claims

1. Refrigerated vending machine (31, 201) for fresh fruits (77, 182) comprising a fruit compartment (39) from which the stored fruits (77, 182) are susceptible of selection, a service tray (38, 208), and a movement mechanism for moving a selected fruit , said vending machine being **characterized in that** it comprises a processing unit (42, 212) for the selected fruit (77, 182); and hygienic protection means (43);
the processing unit (42, 212) includes a peeling device (93, 214) and cutting and coring means actuatable for peeling and portioning the selected fruit (77, 182);
the movement mechanism is arranged for moving the selected fruit from the fruit compartment to a working station (45, 206) for being worked by the processing unit and from the working station to the service tray (38, 207) where the selected fruit is distributed;
the hygienic protection means (43), include cleaning means (111, 217) for cleaning the processing unit in an automatic way and assuring distribution of the peeled and portioned fruits (77,182) in excellent hygienic conditions;
the stored fruits (77, 182) are natural fruits which are suitably selected and cleaned and singularly lodged in respective containers (47), the containers being closed and designed for the function of hygienic protection and pre-positioning of the fruit with respect to the processing unit;
the movement mechanism is arranged for moving the selected fruit in its container; the vending machine further comprises a device (52, 211) for opening the container of the selected fruit, and said processing unit (42, 212) is arranged for taking the selected fruit from its container for peeling , coring and cutting and for re-positioning a peeled and cut fruit in its container for being distributed in the service tray (38, 207).

2. Vending machine according to claim 1, in which the fruits comprise apples (77), said machine being **characterized in that** the peeling device (93, 214) includes a centering element (92), a taking member (91) and a blade (103) and in which
the centering element (92) is actuatable for centering the selected apple in association with the action of the said taking member,
the taking member (91) has a plurality of pointed ends (100) for sticking the selected apple around the core (101) and taking said selected apple; and
said blade (103) is movable between an inoperative position and positions of cooperation with the taken apple and laying along a curvilinear trajectory associated with a predetermined profile of a standard fruit.

3. Vending machine according to claim 2, **characterized in that** said taking member (91) is disposed above the working station and is susceptible of axial motion between a lower position and a upper position for sticking the selected apple (77) in the lower position and lifting the apple in the upper position, said taking member being also rotatable for rotating a taken apple in interference with the said blade for peeling the taken apple in the positions of cooperation.

4. Vending machine according to claim 3, **characterized in that** said cutting and coring means includes a cutting and coring tool (94) having a plurality of crown blades (108) for slice cutting of the apple and a ring-like blade (107) for coring the apple wherein said tool is actuatable in a cutting position beneath the taken apple, said taking member (91) being provided for moving a taken and peeled apple from the upper position to the lower position, in interference with said tool (94), for the slice cutting and the coring of the peeled apple.

5. Vending machine according to claim 4, **characterized in that** said centering element (92), after the coring of the apple, is actuatable as an ejector for removing the core and other parts of the apple remained on said pointed ends (100).

6. Vending machine according to claim 1, **characterized in that** said containers (47) provide a centering projection (78) adapted to cooperate with a lower concavity of the lodged fruit (77) for a centered taken by the processing unit (42, 212).

7. Vending machine according to claim 6, **characterized in that** it can use containers (47) having labels (126) with typology data and/or expiration data and it provides a reading and recognizing device (127) for the data and means (128) responsive to said reading and recognizing device for discarding the container with not acceptable data.

8. Vending machine according to any one of the preceding claims, **characterized in that** said hygienic protection means (43) comprise a cooling unit (56) and a discard tank (61) for receiving the discards (101, 104) produced by the processing unit and in which the cooling unit is provided for maintaining the stored fruits (77, 182) and the discards at a low controlled temperature.

9. Vending machine according to any one of the preceding claims, **characterized in that** said hygienic protection means (43) comprises cleaning means (111, 217) for said processing unit and control means for actuating said cleaning means after a predetermined rest period of the peeling device and the cutting and coring means.

10. Vending machine according to any one of the preceding claims, **characterized in that** said hygienic protection means comprises radiation means (112), as an example ultraviolet germicide beams, for said processing unit (42, 212).

11. Vending machine according to any one of the preceding claims, **characterized in that** it comprises a plurality of drawers (40) laying on overlapped planes of the fruit compartment and in which said movement mechanism comprises a platform (44) positionable on a plane of the drawers, each drawer having guide walls (82) for arranging said fruits along a single row, an output vane (84) and means (87) for the sequence outputting of said fruits through said vane, said movement mechanism (41) being provided for lodging a selected fruit outputted from said vane and moving the selected fruit according to three axes.

12. Vending machine according to one of the claims from 1 to 10, **characterized in that** it comprises a drum group (203) for supporting a series of vertical tubes (203) in which fruit containers (47) are arranged in overlapped condition and having openings at the base of the tubes for the selective passage of said containers; the movement means including a selection section (218) and shifting sections (219, 221), the selection section (218) rotating the drum group (203) in registration with an output station (209) and including a shutter member (231) for controlling the selective passage of the containers (47) to the output station through said openings, and the shifting sections (219, 221) moving the selected container between the output station and the working station (206) and from the working station to the service tray (207).

13. Vending machine according to any one of the preceding claims, **characterized in that** it further comprises storing and service means for fruit flatware and/or flavouring for the prepared fruit, said storing and service means comprising one or more trays accessible by the consumer and dispensing means of said flat and/or flavouring operative jointly to the dispensing of the prepared fruit.

14. Vending machine according to claim 1 **characterized in that** said container (47) is designed for the function of pre-positioning, hygienic protection and presentation of selected and cleaned apples and in which said container further includes a cover (49) susceptible of opening by the opening device (52, 211), of the vending machine (31, 201), and a centering projection (78) for the lodged apple (77), for enabling a centered taken to a taking member of said peeling and/or cutting group.

15. Vending machine according to claim 14 **characterized in that** said container supports a code (126) representative of data of typology of the fruit and/or of data of expiration of the fruit, said code being provided for being read by a reading device of the said vending machine.

16. Method for distributing apples by means of a cooled vending machine having a fruit compartment (39) from which the apples (77) are susceptible of selection, said method being **characterized by** the fact that it provides the following steps:
a) providing a vending machine (31, 201) comprising a processing unit (42, 212) for peeling, cutting and coring apples (77) lodged in single containers (47) furnished with covers (49), means (52, 211) for the opening of said covers, discard tanks for receiving the produced peels and cores means for sanitizing said unit in an automatic way and movement mechanism for moving a selected apple;
b) providing a series of containers (47) and respective covers (49) in materials for alimentary use for containing apples (77) of given typologies, said containers having given dimensions and a central projection (78) such to maintain in position with respect to the processing unit (42, 212) and substantially centered the contained apple;
c) selecting said apples in agreement with said given typologies, cleaning them, inserting the apples in said containers and closing the containers in a sanitized environment and with personnel sanitarily qualified for food manipulations;
d) arranging said containers in said vending machine;
e) the movement mechanism moving the selected apple in its container from the fruit compartment to a working station (45, 206) for being worked by the processing unit and from the working station to a service tray (38, 207) of the vending machine where the selected apple is distributed;
f) the processing unit (42, 212) operating in axis with the projection of the container for taking the selected apple around the core from its container for peeling, coring and cutting it;
g) said processing unit re-positioning the peeled and portioned apple in the respective container (47) in order to be transferred in a service tray of the vending machine.

17. Method for distributing apples according to claim 16, **characterized in that** said processing unit is irradiated by ultraviolet germicide beams.

## Patentansprüche

1. Verkaufskühlautomat (31, 201) für frische Früchte (77, 182), bestehend aus einem Früchtefach (39), aus dem die gelagerten Früchte (77, 182) ausgewählt werden können, einem Bedienungsfach (38, 208), und einem Bewegungsmechanismus zum Bewegen einer ausgewählten Frucht,
**dadurch gekennzeichnet, daß**
der Verkaufsautomat eine Verarbeitungseinheit (42, 212) für die gewählte Frucht und hygienische Schutzvorrichtungen (43) aufweist,
die Verarbeitungseinheit (42, 212) ein Schälgerät (93, 214) und Schneide- und Entkernungsvorrichtungen zum Schälen und Aufteilen der ausgewählten Frucht aufweist,
wobei der Bewegungsmechanismus dafür eingerichtet ist, die ausgewählte Frucht vom Früchtefach zu einer Bearbeitungsstation (45, 206) für die Bearbeitung durch die Verarbeitungseinheit zu bewegen, und von der Bearbeitungsstation zum Bedienungsfach (38, 207), wo die ausgewählte Frucht ausgegeben wird,
die hygienischen Schutzvorrichtungen (43) Reinigungseinrichtungen (111, 217) zum automatischen Reinigen der Verarbeitungseinheit und zum Sicherstellen der Ausgabe der geschälten und portionierten Früchte (77,182) in ausgezeichnetem hygienischem Zustand enthalten,
die gelagerten Früchte (77, 182) natürliche Früchte sind, die geeignet ausgewählt und gereinigt und einzeln in zugehörigen Behältern (47) aufbewahrt, und die Behälter verschlossen und zum hygienischen Schutz und zur Vorpositionierung der Frucht in Hinsicht auf die Verarbeitungseinheit ausgebildet sind, und
der Bewegungsmechanismus dafür eingerichtet ist, die ausgewählte Frucht in ihrem Behälter zu bewegen, der Verkaufsautomat ferner eine Vorrichtung (52, 211) zum Öffnen des Behälters der ausgewählten Frucht umfasst, und die Verarbeitungseinheit (42, 212) dafür eingerichtet ist, die ausgewählte Frucht zum Schälen, Entkernen und Schneiden aus ihrem Behälter zu nehmen und eine geschälte und geschnittene Frucht in ihren Behälter zur Ausgabe im Bedienungsfach (38, 207) zurück zu platzieren.

2. Verkaufsautomat nach Anspruch 1, bei dem die Früchte Äpfel (77) umfassen, und der
**dadurch gekennzeichnet ist, dass**
das Schälgerät (93, 214) ein Zentrierelement (92), ein Greifteil (91) und eine Klinge (103) enthält, und wobei
das Zentrierelement (92) in Verbindung mit der Einwirkung des Greifteils für das Zentrieren des ausgewählten Apfels betätigbar ist,
und das Greifteil (91) eine Vielzahl spitzer Enden (100) zum Einstechen in den Bereich um den Kern (101) des Apfels und Ergreifen des ausgewählten Apfels hat, und
die Klinge (103) zwischen einer Ruheposition und Bearbeitungspositionen für den gegriffenen Apfel, die entlang einer kurvenförmigen Bahn liegen, die im Zusammenhang mit einem vorgegebenen Profil einer Standardfrucht steht, beweglich ist.

3. Verkaufsautomat nach Anspruch 2,
**dadurch gekennzeichnet, dass**
das Greifteil (91) oberhalb der Bearbeitungsstation angeordnet ist und axial zwischen einer unteren und oberen Position bewegt werden kann, um in den ausgewählten Apfel (77) in der unteren Position einzustechen und ihn in die obere Position anzuheben, wobei das Greifteil auch drehbar ist, um den gegriffenen Apfel im Eingriff mit der Klinge zum Schälen des gegriffenen Apfels in den Bearbeitungspositionen zu drehen.

4. Verkaufsautomat nach Anspruch 3,
**dadurch gekennzeichnet, dass**
die Schneide- und Entkernungsvorrichtungen ein Schneide- und Entkernungswerkzeug (94) enthalten, das eine Vielzahl kronenförmig angeordneter Klingen (108) hat, um den Apfel in Stücke zu schneiden, und eine ringähnliche Klinge (107), um den Apfel zu entkernen, wobei das Werkzeug in einer Schneideposition unterhalb des gegriffenen Apfels betätigbar ist, und das Greifteil (91) vorgesehen ist, um einen gegriffenen und geschälten Apfel von der oberen Position in die untere Position zu bewegen, um im Eingriff mit dem Werkzeug (94) den geschälten Apfel in Stücke zu zerschneiden und zu entkernen.

5. Verkaufsautomat nach Anspruch 4,
**dadurch gekennzeichnet, dass**
das Zentrierelement (92) nach dem Entkernen des Apfels als Auswerfer zum Entfernen des Kerns und anderer Teile des Apfels, die auf den spitzen Enden (100) verblieben sind, betätigt werden kann.

6. Verkaufsautomat nach Anspruch 1,
**dadurch gekennzeichnet, dass**
die Behälter (47) einen Zentriervorsprung (78) haben, der geeignet ist, mit einer unteren Wölbung der aufbewahrten Frucht für eine von der Verarbeitungseinheit (42, 212) gegriffene, zentrierte Frucht zusammenzuwirken.

7. Verkaufsautomat nach Anspruch 6,
**dadurch gekennzeichnet, dass**
Behälter (47) benutzt werden können, die Etiketten (126) mit Bezeichnung und/oder Verfallsdatum haben, und er über ein Lese- und Erkennungsgerät (127) für die Daten sowie Einrichtungen (128), die auf das Lese- und Erkennungsgerät reagieren, um Behälter mit nicht akzeptierten Daten auszuscheiden, verfügt.

8. Verkaufsautomat nach einem der vorangehenden Ansprüche,
**dadurch gekennzeichnet, dass**
die hygienischen Schutzvorrichtungen (43) eine Kühleinheit (56) und einen Abfallbehälter (61) zur Aufnahme der Abfälle, die von der Verarbeitungseinheit erzeugt werden, umfassen, und wobei die Kühleinheit dazu dient, die gelagerten Früchte (77, 182) und die Abfälle auf einer niedrigen überwachten Temperatur zu halten.

9. Verkaufsautomat nach einem der vorangehenden Ansprüche,
**dadurch gekennzeichnet, dass**
die hygienische Schutzvorrichtung (43) Reinigungseinrichtungen (111, 217) für die Verarbeitungseinheit und Steuerungseinrichtungen für die Ansteuerung der Reinigungseinrichtungen nach einer vorgegebenen Ruhezeit des Schälgerätes und der Schneide- und Entkernungsvorrichtung enthält.

10. Verkaufsautomat nach einem der vorangehenden Ansprüche,
**dadurch gekennzeichnet, dass**
die hygienische Schutzvorrichtung (43) Strahlungsvorrichtungen (112), zum Beispiel für ultraviolette keimtötende Strahlen, für die Verarbeitungseinheit (42, 212) enthält.

11. Verkaufsautomat nach einem der vorangehenden Ansprüche,
**dadurch gekennzeichnet, dass**
er eine Vielzahl von Schubfächern (40) enthält, die auf übereinanderliegenden Ebenen des Fruchtfaches liegen, und der Bewegungsmechanismus eine Plattform (44) hat, die auf einer Ebene der Schubfächer positionierbar ist, und jedes Schubfach Führungswände (82) zum Anordnen der Früchte entlang einer einzigen Reihe hat, und einen Ausstoßschieber (84) und Vorrichtungen (87) zum sequentiellen Ausgeben der Früchte mittels des Schiebers, und der Bewegungsmechanismus (41) ausgestaltet ist, um eine ausgewählte Frucht, die vom Schieber ausgegeben wurden, aufzunehmen und die ausgewählte Frucht in drei Achsen zu bewegen.

12. Verkaufsautomat nach einem der Ansprüche 1 bis 10,
**dadurch gekennzeichnet, dass**
er eine Trommeleinheit (203) zur Aufnahme einer Reihe senkrechter Röhren (203) enthält, in denen Fruchtbehälter (47) in überlappender Lage angeordnet sind, und die Röhren Öffnungen am Boden für den selektiven Durchgang der Behälter haben, und die Bewegungsvorrichtung eine Auswahlstufe (218) und Verschiebestufen (219, 221) enthält, und die Auswahlstufe (218) die Trommeleinheit (203) übereinstimmend mit einer Ausgabestation (209) dreht und einen Verschluß (231) zum Steuern des selektiven Durchgangs der Behälter (47) durch die Öffnungen in die Ausgabestation hat, und die Verschiebestufen (219, 221) die ausgewählten Behälter zwischen der Ausgabestation und der Bearbeitungsstation (206) und von der Bearbeitungsstation zum Bedienungsfach (203) bewegen.

13. Verkaufsautomat nach einem der vorangehenden Ansprüche,
**dadurch gekennzeichnet, dass**
er des weiteren Speicher- und Bedienungsvorrichtungen für Besteck und/oder Gewürz für die zubereitete Frucht enthält, wobei die Speicher- und Bedienungsvorrichtungen einen oder mehrere für den Kunden zugängliche Fächer und Ausgabevorrichtungen für das Besteck und/oder das Gewürz enthalten, die gemeinsam mit der Ausgabe der zubereiteten Frucht in Betrieb sind.

14. Verkaufsautomat nach Anspruch 1,
**dadurch gekennzeichnet, dass**
der Behälter (47) für die Funktion der Vorpositionierung, des hygienischen Schutzes und der Präsentation von ausgewählten und gesäuberten Äpfeln ausgebildet ist und der Behälter eine Abdeckung (49) hat, die durch eine Öffnungsvorrichtung (52, 211) des Verkaufsautomaten (31, 201) geöffnet werden kann, und einen Zentriervorsprung (78) für den aufbewahrten Apfel, um zu ermöglichen, eine zentrierte Frucht zu einem Greifteil der Schäl- und Schneideeinheit zu nehmen.

15. Verkaufsautomat nach Anspruch 14,
**dadurch gekennzeichnet, dass**
der Behälter einen Code (126) trägt, der Daten der Bezeichnung der Frucht und/oder das Verfallsdatum der Frucht darstellt, und der zum Lesen durch das Lesegerät des Verkaufsautomaten vorgesehen ist.

16. Verfahren zum Vertreiben von Äpfeln durch einen gekühlten Verkaufsautomaten mit einem Fruchtfach (39), aus dem Äpfel (77) ausgewählt werden können,
**dadurch gekennzeichnet, dass** es folgende Schritte vorsieht:
a) Bereitstellen eines Verkaufsautomaten (31, 201), umfassend eine Verarbeitungseinheit (42, 212) zum Schälen, Schneiden und Entkernen von in mit Deckeln (49) ausgestatteten Einzelbehältern (47) aufbewahrten Äpfeln (77), Vorrichtungen (52, 211) zum Öffnen der Deckel, Abfallbehälter zur Aufnahme der produzierten Schale und Kerne; Vorrichtungen zum automatischen Reinigen der Einheit und Bewegungsmechanismen zum Bewegen eines ausgewählten Apfels,
b) Bereitstellen einer Reihe von Behältern (47) und zugehörigen Deckeln (49) aus Materialien zur Benutzung für Lebensmittel zur Aufnahme von Äpfeln (77) bestimmter Arten, wobei die Behälter bestimmte Abmessungen und einen mittigen Vorsprung (78) haben, um den aufbewahrten Apfel bezüglich der Verarbeitungseinheit (42, 212) und im Wesentlichen zentriert in Position zu halten,
c) Auswählen der Äpfel in einer desinfizierten Umgebung und durch hygienisch für die Lebensmittelverarbeitung qualifiziertes Personal gemäß den gegebenen Arten, Reinigung, Einlegen in die Behälter, und Verschließen der Behälter,
d) Anordnen der Behälter im Verkaufsautomaten
e) der Bewegungsmechanismus bewegt den gewählten Apfel in seinem Behälter vom Fruchtfach zu einer Bearbeitungsstation (45, 206), um von der Verarbeitungseinheit bearbeitet zu werden, und von der Bearbeitungsstation zu einem Bedienungsfach (38, 207) des Verkaufsautomaten, wo der gewählte Apfel ausgegeben wird,
f) die Verarbeitungseinheit (42, 212) arbeitet in einer Achse mit dem Vorsprung des Behälters, um den gewählten Apfel um den Kern herum aus seinem Behälter zum Schälen, Entkernen und Schneiden zu nehmen, und
g) die Verarbeitungseinheit platziert den geschälten und portionierten Apfel in den entsprechenden Behälter (47) zurück, um ihn in ein Bedienungsfach des Verkaufsautomaten zu überführen.

17. Verfahren zum Vertreiben von Äpfeln gemäß Anspruch 16,
**dadurch gekennzeichnet, dass**
die Verarbeitungseinheit von ultravioletten keimtötenden Strahlen bestrahlt wird.

## Revendications

1. Distributeur automatique réfrigéré (31, 201) de fruits frais (77, 182) comprenant un compartiment de fruit (39) à partir duquel les fruits stockés (77, 182) sont susceptibles d'être sélectionnés, un plateau de service (38, 208), et un mécanisme de déplacement pour déplacer un fruit sélectionné, ledit distributeur automatique étant **caractérisé en ce qu'**il comprend une unité de traitement (42, 212) pour le fruit sélectionné (77, 182) ; et des moyens de protection hygiéniques (43) ;
l'unité de traitement (42, 212) comprend un dispositif de pelage (93, 214) et des moyens de coupe et d'enlèvement de trognon actionnables pour peler et couper en portions le fruit sélectionné (77, 182) ;
le mécanisme de déplacement est agencé pour déplacer le fruit sélectionné du compartiment de fruit vers une station de travail (45, 206) pour être travaillé par l'unité de traitement et de la station de travail vers le plateau de service (38, 207) où le fruit sélectionné est distribué ;
les moyens de protection hygiéniques (43) comprennent des moyens de nettoyage (111, 217) pour le nettoyage de l'unité de traitement de manière automatique et garantissant la distribution des fruits pelés et coupés en portions (77, 182) dans d'excellentes conditions d'hygiène ;
les fruits stockés (77, 182) sont des fruits naturels qui sont sélectionnés et nettoyés de manière appropriée et logés singulièrement dans des conteneurs (47) respectifs, les conteneurs étant fermés et conçus pour assurer la fonction de protection hygiénique et de prépositionnement du fruit par rapport à l'unité de traitement ;
le mécanisme de déplacement est agencé pour déplacer le fruit sélectionné dans son conteneur ; le distributeur automatique comprend en outre un dispositif (52, 211) pour ouvrir le conteneur du fruit sélectionné, et ladite unité de traitement (42, 212) est agencée pour prélever le fruit sélectionné de son conteneur pour peler le trognon, couper et repositionner un fruit pelé et coupé dans son conteneur pour être distribué dans le plateau de service (38, 207).

2. Distributeur automatique selon la revendication 1, dans lequel les fruits comprennent des pommes (77), ladite machine étant **caractérisée en ce que** le dispositif de pelage (93, 214) comprend un élément de centrage (92), un élément de prélèvement (91) et une lame (103) et dans lequel
l'élément de centrage (92) est actionnable pour centrer la pomme sélectionnée en association avec l'action dudit élément de prélèvement,
l'élément de prélèvement (91) comprend une pluralité d'extrémités pointues (100) pour piquer la pomme sélectionnée autour du trognon (101) et prélever ladite pomme sélectionnée ; et
ladite lame (103) peut être déplacée entre une position inactive et des positions de coopération avec la pomme prélevée et se situant sur une trajectoire curviligne associée à un profil prédéterminé d'un fruit type.

3. Distributeur automatique selon la revendication 2, **caractérisé en ce que** ledit élément de prélèvement (91) est disposé au-dessus de la station de travail et est susceptible de subir un mouvement axial entre une position inférieure et une position supérieure pour piquer la pomme (77) sélectionnée dans la position inférieure et soulever la pomme dans la position supérieure, ledit élément de prélèvement pouvant également tourner pour faire tourner une pomme prélevée en interférence avec ladite lame pour peler la pomme prélevée dans les positions de coopération.

4. Distributeur automatique selon la revendication 3, **caractérisé en ce que** lesdits moyens de coupe et d'enlèvement de trognon comprennent un outil de découpage et permettant d'enlever le trognon (94) comportant une pluralité de lames fixes (108) pour couper la pomme en tranches et une lame annulaire (107) pour enlever le trognon de la pomme, où ledit outil est actionnable dans une position de coupe sous la pomme prélevée, ledit élément de prélèvement (91) étant prévu pour déplacer une pomme prélevée et pelée de la position supérieure à la position inférieure, en interférence avec ledit outil (94), pour la coupe en tranches et l'enlèvement du trognon de la pomme pelée.

5. Distributeur automatique selon la revendication 4, **caractérisé en ce que** ledit élément de centrage (92), après avoir enlevé le trognon de la pomme, est actionnable comme éjecteur pour retirer le trognon et d'autres parties de la pomme restées sur lesdites extrémités pointues (100).

6. Distributeur automatique selon la revendication 1, **caractérisé en ce que** lesdits conteneurs (47) forment une saillie de centrage (78) adaptée pour coopérer avec une concavité inférieure du fruit logé (77) pour un fruit centré prélevé par l'unité de traitement (42, 212).

7. Distributeur automatique selon la revendication 6, **caractérisé en ce qu'**il peut utiliser des conteneurs (47) possédant des étiquettes (126) avec des données de typologie et/ou des données d'expiration et **en ce qu'**il fournit un dispositif de lecture et de reconnaissance (127) pour les données et des moyens (128) réactifs audit dispositif de lecture et de reconnaissance pour mettre au rebut le conteneur avec des données non acceptables.

8. Distributeur automatique selon l'une quelconque des revendications précédentes, **caractérisé en ce que** lesdits moyens de protection hygiéniques (43) comprennent une unité de refroidissement (56) et un réservoir de mise au rebut (61) pour recevoir les rejets (101, 104) produits par l'unité de traitement et dans laquelle l'unité de refroidissement est prévue pour maintenir les fruits stockés (77, 182) et les rejets à une basse température régulée.

9. Distributeur automatique selon l'une quelconque des revendications précédentes, **caractérisé en ce que** lesdits moyens de protection hygiéniques (43) comprennent des moyens de nettoyage (111, 217) pour ladite unité de traitement et des moyens de régulation pour actionner lesdits moyens de nettoyage après une période de repos prédéterminée du dispositif de pelage et des moyens de coupe et d'enlèvement de trognon.

10. Distributeur automatique selon l'une quelconque des revendications précédentes, **caractérisé en ce que** lesdits moyens de protection hygiéniques comprennent des moyens de rayonnement (112), par exemple des faisceaux de rayons ultraviolets germicides, pour ladite unité de traitement (42, 212).

11. Distributeur automatique selon l'une quelconque des revendications précédentes, **caractérisé en ce qu'**il comprend une pluralité de tiroirs (40) situés dans des plans chevauchants du compartiment de fruit et dans laquelle ledit mécanisme de déplacement comprend une plate-forme (44) pouvant être positionnée sur un plan des tiroirs, chaque tiroir comportant des parois de guidage (82) pour disposer lesdits fruits le long d'une seule rangée, une aube de sortie (84) et des moyens (87) pour la sortie échelonnée desdits fruits à travers ladite aube, ledit mécanisme de déplacement (41) étant prévu pour loger un fruit sélectionné sorti de ladite aube et déplacer le fruit sélectionné selon trois axes.

12. Distributeur automatique selon l'une des revendications 1 à 10, **caractérisé en ce qu'**il comprend un groupe de tambours (203) pour supporter une série de tubes verticaux (203) dans lesquels des conteneurs de fruit (47) sont agencés dans un état chevauchant et comportant des ouvertures à la base des tubes pour le passage sélectif desdits conteneurs ; les moyens de mouvement comprenant une section de sélection (218) et des sections de décalage (219, 221), la section de sélection (218) faisant tourner le groupe de tambours (203) en alignement avec une station de sortie (209) et comprenant un élément obturateur (231) pour réguler le passage sélectif des conteneurs (47) vers la station de sortie à travers lesdites ouvertures, et les sections de décalage (219, 221) déplaçant le conteneur sélectionné entre la station de sortie et la station de travail (206) et de la station de travail au plateau de service (207).

13. Distributeur automatique selon l'une quelconque des revendications précédentes, **caractérisé en ce qu'**il comprend en outre des moyens de stockage et de service pour mettre à disposition des plats et/ou une aromatisation pour le fruit préparé, lesdits moyens de stockage et de service comprenant un ou plusieurs plateaux accessibles par le consommateur et des moyens de distribution desdits plats et/ou aromatisation opérationnels conjointement à la distribution du fruit préparé.

14. Distributeur automatique selon la revendication 1, **caractérisé en ce que** ledit conteneur (47) est conçu pour assurer la fonction de prépositionnement, de protection hygiénique et de présentation de pommes sélectionnées et nettoyées et dans lequel ledit conteneur comprend en outre un couvercle (49) susceptible d'être ouvert par le dispositif d'ouverture (52, 211), du distributeur automatique (31, 201), et une saillie de centrage (78) pour la pomme logée (77), pour permettre à un fruit centré d'être prélevé par un élément de prélèvement dudit groupe de pelage et/ou d'enlèvement de trognon.

15. Distributeur automatique selon la revendication 14, **caractérisé en ce que** ledit conteneur supporte un code (126) représentant des données de typologie du fruit et/ou des données d'expiration du fruit, ledit code étant prévu pour être lu par un dispositif de lecture dudit distributeur automatique.

16. Procédé de distribution de pommes au moyen d'un distributeur automatique réfrigéré comportant un compartiment de fruit (39) à partir duquel les pommes (77) sont susceptibles d'être sélectionnées, ledit procédé étant **caractérisé par le fait qu'**il procède aux étapes suivantes consistant à :
a) fournir un distributeur automatique (31, 201) comprenant une unité de traitement (42, 212) pour peler, couper et enlever le trognon des pommes (77) logées dans des conteneurs uniques (47) équipés de couvercles (49), des moyens (52, 211) pour l'ouverture desdits couvercles, des réservoirs de mise au rebut pour recevoir les épluchures et les trognons produits, et des moyens pour désinfecter ladite unité de manière automatique et un mécanisme de déplacement pour déplacer une pomme sélectionnée ;
b) fournir une série de conteneurs (47) et des couvercles (49) respectifs dans des matériaux pour une utilisation alimentaire pour contenir des pommes (77) de typologies données, lesdits conteneurs ayant des dimensions données et une saillie centrale (78) de manière à être maintenu en position par rapport à l'unité de traitement (42, 212) et centrés sensiblement sur la pomme contenue ;
c) sélectionner lesdites pommes conformément auxdites typologies données, les nettoyer, insérer les pommes dans lesdits conteneurs et fermer les conteneurs dans un environnement désinfecté et avec un personnel qualifié sur le plan sanitaire pour des manipulations alimentaires ;
d) agencer lesdits conteneurs dans ledit distributeur automatique ;
e) le mécanisme de déplacement déplaçant la pomme sélectionnée dans son conteneur du compartiment de fruit à une station de travail (45, 206) pour être travaillée par l'unité de traitement et de la station de travail à un plateau de service (38, 207) du distributeur automatique où la pomme sélectionnée est distribuée ;
f) l'unité de traitement (42, 212) fonctionnant en axe avec la saillie du conteneur pour prélever la pomme sélectionnée autour du trognon à partir de son conteneur pour la peler, lui enlever le trognon et la couper ;
g) ladite unité de traitement repositionnant la pomme pelée et coupée en portions dans le conteneur respectif (47) afin qu'elle soit transférée dans un plateau de service du distributeur automatique.

17. Procédé de distribution de pommes selon la revendication 16, **caractérisé en ce que** ladite unité de traitement est irradiée par des faisceaux de rayons ultraviolets germicides.
